(19) Europäisches Patentamt
European Patent Office
Office européen des brevets

(11) **EP 3 659 445 A1**

(12) **DEMANDE DE BREVET EUROPEEN**

(43) Date de publication:
**03.06.2020 Bulletin 2020/23**

(51) Int Cl.:
*A23L 27/10* *(2016.01)*     *A23L 27/14* *(2016.01)*
*A23L 33/105* *(2016.01)*

(21) Numéro de dépôt: **19212460.0**

(22) Date de dépôt: **29.11.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **30.11.2018 FR 1872128**

(71) Demandeur: **EVOLUGOUT**
**46160 Cajard (FR)**

(72) Inventeur: **ROBIN, Claude-Emmanuel**
**46160 CAJARC (FR)**

(74) Mandataire: **Ipside**
**6, Impasse Michel Labrousse**
**31100 Toulouse (FR)**

(54) **PROCÉDÉ D'EXTRACTION DE SAFRAN**

(57) La présente invention vise un procédé (100) comportant au moins une première étape (101) d'extraction durant laquelle des stigmates de fleurs de safran sont macérés dans un liquide de sorte à obtenir un extrait de safran. La macération est réalisée sous vide. La concentration en poids de stigmates dans le liquide, la température et la durée de la macération sont telles que l'extrait de safran ainsi obtenu comprend une quantité de saveur de safran, et une quantité d'arôme de safran, respectivement supérieures ou égales à la quantité de saveur de safran et la quantité d'arôme de safran comprise dans le safran des stigmates des fleurs de safran utilisés pour la préparation dudit extrait.

[Fig. 1]

**Description**

**Domaine technique de l'invention**

La présente invention s'applique au domaine de la cuisine.

Plus particulièrement, la présente invention s'applique au traitement du safran.

La présente invention vise un procédé d'extraction de safran à partir de stigmates de fleurs de safran ainsi qu'un extrait de safran susceptible d'être obtenu par ledit procédé. Elle vise également un condiment comprenant ledit extrait de safran.

**Technique antérieure**

Le safran est une épice complexe utilisée dans de très nombreuses préparations culinaires. Comme elle apporte beaucoup de saveur, de l'arôme et aussi une belle couleur jaune-orangée aux plats, cette épice est très prisée, autant par les ménagères que par les grands restaurateurs.

Le safran n'étant présent que dans le stigmate de la fleur *Crocus Sativus,* cette épice est un produit difficile à obtenir et son prix est très élevé. C'est en fait le produit consommable le plus cher au monde.

Le safran est le plus souvent utilisé sous forme de poudre lors de la cuisson d'aliments ou directement dans les plats avant le service. Toutefois, en raison de son prix élevé, l'épice est très souvent imitée ou coupée avec un autre produit comme divulgué dans la publication « identification and isotopic analysis of safranal from supercritical fluid extraction and alcoholic extracts of saffron » de Semiond et al, 1996. Un procédé courant est de mélanger la poudre de safran à des poudres de couleur comparable comme de la poudre de curcuma ou de paprika ou encore de légumes contenant des caroténoïdes.

Les stigmates de safran sont aussi utilisés directement mais n'échappent pas non plus à la falsification. Ils peuvent être mélangés à diverses fibres teintes en rouge (par exemple des fibres de maïs ou des fibres de grenade) ou bien encore avec les étamines de la fleur de safran elle-même, inodores et sans saveur, mais difficilement décelables car elles-aussi de couleur jaune.

Parallèlement à ces procédés qui dénaturent l'épice, l'utilisation directe des stigmates pour en obtenir un extrait de safran est complexe et présente d'importantes difficultés.

Par exemple, on peut procéder à leur infusion directe dans de l'eau chaude, du lait, de la crème, du jus de cuisson, etc. Un temps d'une à deux heures est alors nécessaire pour répartir couleur et saveur du safran dans une préparation culinaire. Au cours de tels procédés d'importantes difficultés interviennent car les propriétés organoleptiques du safran sont particulièrement sensibles à la chaleur.

Trois molécules contrôlent les propriétés organoleptiques du safran. Il s'agit de la crocine, responsable de la couleur du safran, de la picrocrocine, responsable de la saveur spécifique du safran et du safranal responsable de l'arôme du safran.

Le contrôle qualité d'un safran est aujourd'hui règlementé par la norme internationale ISO/TS 3632-2:2002 qui classe cette épice en trois catégories selon les valeurs d'absorbance mesurées pour les trois molécules citées ci-dessus mises en solution (ces valeurs étant proportionnelles aux concentrations des molécules dans la solution). Cette norme considère que pour être conforme à la catégorie de qualité supérieure (catégorie I), un safran doit présenter à l'analyse photo-spectrométrique des concentrations correspondant aux valeurs d'absorbances minimales de 70 pour la picrocrocine, 20 pour le safranal et 200 pour la crocine, avec un taux d'humidité globale (humidité + volatils) inférieur à 12%.

Les variations respectives des concentrations en crocine, picrocrocine et safranal dans les stigmates sont extrêmement complexes.

Dans la publication scientifique de Bergoin M. en 2005 intitulée « Application du concept de raffinage végétal au safran du Quercy (crocus sativus) pour la valorisation intégrée des potentiels aromatiques et colorants » sont résumées les principales causes de ces variations. La plus importante, provoquée par une augmentation de la température, concerne la dégradation de la crocine en picrocrocine et la dégradation de la picrocrocine en safranal libre.

Selon la publication intitulée « synthesis of crocin, picrocrocin and safranal by saffron stigma-like structures proliferated in vitro » de Himeno H. et Sano K. en 1987, à haute température, la picrocrocine donne directement du safranal par déshydratation et dans la publication intitulée « Analysis of the volatile components of Saffron » de Rodel W. et Petrzika M. en 1991, il est montré que la formation de safranal s'accompagne d'une baisse du taux de picrocrocine dans les stigmates. En outre, le safran étant très hygroscopique, il s'oxyde, noircit et perd son arôme lorsqu'il est exposé à l'humidité. La concentration en safranal et donc l'arôme du safran, dépendent des conditions de séchage et de conservation, déterminantes pour la qualité de l'épice. Par exemple, pour un même safran, des stigmates séchés dans un four n'auront pas les mêmes propriétés que d'autres ayant séché au soleil ou dans un endroit aéré à l'ombre. Cela est notamment démontré dans la publication de Raina B. L. et al., de 1996, intitulée « Changes in pigments and volatiles of Saffron (crocus stivus L.) during processing and storage ».

La simple cuisson d'une solution contenant de la poudre de safran, ou bien des stigmates de fleurs de safran lorsqu'ils sont cuisinés ou introduits dans un plat chaud entraine donc des dégradations et échanges entre les trois molécules. Bien que ces phénomènes aient été étudiés et soient aujourd'hui connus, leur complexité représente des difficultés pour obtenir un extrait de safran à partir de stigmates de fleurs de safran, dont les propriétés organoleptiques d'arôme et saveur du safran utilisé sont conservées dans l'extrait ou sont même améliorées.

**Présentation de l'invention**

À cet effet, selon un premier aspect, la présente invention vise un procédé d'extraction de safran comportant au moins une étape d'extraction par macération de stigmates de fleurs de safran dans un liquide de sorte à obtenir un extrait de safran, la concentration en poids de stigmates dans le liquide étant supérieure ou égale à 0,55 g/L, et la macération étant réalisée sous vide à une température comprise entre 45°C et 55°C pendant une durée comprise entre 40 heures et 52 heures. De préférence, les stigmates sont retirés du liquide après l'étape d'extraction.

Les inventeurs ont découvert de façon inattendue que cette durée de macération à la température choisie avec de telles concentrations en stigmates dans le liquide permet d'assurer une bonne macération et un équilibre entre les stigmates et le liquide. Ce procédé permet avantageusement d'extraire le safran dans le liquide en conservant ses propriétés organoleptiques comme expliqué ci-dessous.

Le taux de picrocrocine dans l'extrait lui donne sa saveur et le taux de safranal lui donne son arôme. La molécule agissant sur la couleur, c'est-à-dire la crocine, est rapidement dégradée par la chaleur et devient moins importante. Ce procédé permet d'obtenir, sans intervention d'un agent chimique extérieur, un extrait de safran ayant une concentration en picrocrocine et une concentration en safranal respectivement égales ou supérieures à la concentration en picrocrocine et à la concentration en safranal du safran compris dans les stigmates de fleurs de safran utilisés pour la macération. Cela peut notamment être vérifié en mesurant l'absorbance de la picrocrocine et l'absorbance du safranal de l'extrait de safran obtenu par le procédé objet de la présente invention et en comparant ces absorbances à l'absorbance de la picrocrocine et l'absorbance du safranal du safran des stigmates utilisés dans le procédé. On remarque alors que l'absorbance de la picrocrocine et l'absorbance du safranal de l'extrait de safran obtenu par le procédé objet de la présente invention sont respectivement égales ou supérieures à l'absorbance de la picrocrocine et à l'absorbance du safranal du safran des stigmates utilisés dans le procédé.

Ce procédé permet donc avantageusement d'obtenir un extrait de safran dont la saveur et l'arôme sont égaux ou supérieurs respectivement à la saveur et à l'arôme du safran des stigmates utilisés. Les qualités naturelles du safran sont ainsi avantageusement conservées (pour une concentration en poids de stigmates égale à 0,55g/L), ou améliorées (pour une concentration en poids de stigmates supérieure à 0,55g/L).

Suivant des modes de réalisation préférés, l'invention répond en outre aux caractéristiques suivantes, mises en œuvre séparément ou en chacune de leurs combinaisons techniquement opérantes.

Dans un mode de mise en œuvre particulier, les stigmates de fleur de safran sont macérés dans de l'eau.

Dans un mode de mise en œuvre particulier, la concentration en poids de stigmates dans le liquide est comprise entre 0,55 g/L et 2 g/L, de préférence entre 0,55 g/L et 1,5 g/L. Avec de telles concentrations pourtant minimes, les absorbances mesurées au spectro-photomètre de la picrocrocine et du safranal dans le liquide, qui contrôlent respectivement la saveur et l'arôme de l'extrait de safran, sont jusqu'à 3,5 à 4 fois supérieures aux absorbances des mêmes molécules responsables de la saveur et de l'arôme du safran des stigmates utilisés. L'absorbance d'un élément dans un liquide étant proportionnel à sa concentration dans ce liquide, un tel enrichissement de 350 % à 400 % constaté pour les absorbances correspond à un même enrichissement des concentrations en picrocrocine et en safranal dans le liquide, par rapport au safran initial utilisé.

Selon un mode de mise en œuvre particulier, la macération est réalisée sous vide à une température de 48°C pendant une durée 48 heures. Cette température associée à cette durée permet d'assurer une macération totale et un équilibre entre les stigmates et le liquide. Avec le procédé comprenant une telle étape de macération à 48°C pendant 48 heures, on obtient ainsi la meilleure concentration en picrocrocine, safranal et crocine dans l'extrait obtenu en fonction du poids de stigmates par litre de liquide.

Dans un mode de mise en œuvre particulier, le procédé comporte, après l'étape d'extraction, une étape de pasteurisation de l'extrait de safran à une température comprise entre 63°C et 67°C pendant une durée comprise entre 45 minutes et 90 minutes. Au-delà de 67°C les propriétés du safran utilisé sont endommagées. Cette étape de pasteurisation permet de contrer un éventuel développement bactérien dans l'extrait de safran. Selon un mode de mise en œuvre préféré, l'étape de pasteurisation de l'extrait de safran est réalisée à une température de 65°C pendant une durée de 45 minutes.

Dans un mode de mise en œuvre particulier, le procédé comporte une étape d'ajout à l'extrait de safran d'au moins un exhausteur de goût choisi parmi du sel et du sucre.

Dans un mode de mise en œuvre particulier, le procédé comporte une étape d'ajout d'acide citrique à l'extrait de safran. Cela a pour avantage de vivifier la couleur dudit extrait de safran et de favoriser la conservation de l'extrait (Date limite de conservation plus longue).

Dans un mode de mise en œuvre particulier, le procédé comporte une étape d'ajout à l'extrait de safran d'un gélifiant naturel. De préférence, ledit gélifiant naturel est de l'agar-agar. Préférentiellement le gélifiant naturel est dilué dans de l'eau en ébullition. Selon un mode de mise en œuvre préféré lorsque le gélifiant naturel est ajouté à l'extrait de safran, ledit gélifiant naturel est à une température comprise entre 45°C et 67°C, et ledit extrait de safran est également à une température comprise entre 45°C et 67°C.

Après l'étape d'ajout à l'extrait de safran d'un gélifiant naturel, selon un mode de mise en œuvre particulier, le procédé comporte en outre une étape de sphérification par introduction goutte à goutte dudit extrait de safran étant à une température comprise entre 45°C et 67°C, dans une huile végétale dont la température est comprise entre -10°C et 4°C. Cette étape permet d'obtenir l'extrait de safran, sous une forme globale d'une ou plusieurs sphères gélifiées, sans ajout de composés chimiques dont le but est d'activer la formation de sphères. De préférence, l'huile végétale est de l'huile de pépin de raisins. La sphérification avec agar-agar dans l'huile de pépins de raisins a pour avantage de ne pas altérer le goût de l'extrait de safran comparée aux méthodes de sphérifications connues, utilisées en cuisine moléculaire.

Selon un deuxième aspect, la présente invention vise un extrait de safran susceptible d'être obtenu selon le procédé d'extraction objet de la présente invention comportant au moins une étape d'extraction par macération de stigmates de fleurs de safran dans un liquide selon une concentration en poids de stigmates dans le liquide comprise entre 0,55 g/L et 2 g/L, ledit extrait de safran comportant une concentration en picrocrocine et une concentration en safranal égales ou jusqu'à 4 fois supérieures respectivement à la concentration en picrocrocine et la concentration en safranal du safran compris dans les stigmates de fleurs de safran à partir desquels l'extrait de safran a été obtenu.

Par voie de conséquence, cet extrait de safran comporte avantageusement une saveur et un arôme de safran égaux ou jusqu'à 4 fois supérieurs respectivement à la saveur et à l'arôme du safran compris dans les stigmates de fleurs de safran à partir desquels l'extrait de safran a été préparé.

Selon un troisième et dernier aspect, la présente invention vise un condiment comportant l'extrait de safran objet de la présente invention.

Selon un mode de réalisation particulier, l'extrait de safran ou le condiment, comprend un gélifiant naturel. De préférence ledit condiment comportant l'extrait de safran et le gélifiant naturel ou ledit extrait de safran comprenant le gélifiant naturel, est sous forme globale d'une ou plusieurs sphères. Chaque sphère comporte préférentiellement un diamètre compris entre 2 et 5 mm.

## Brève description des figures

L'invention sera mieux comprise à la lecture de la description suivante, donnée à titre d'exemple nullement limitatif, et faite en se référant aux figures qui représentent :

[Fig. 1] la figure 1 illustre le procédé d'extraction objet de la présente invention selon un mode de mise en œuvre particulier ;
[Fig. 2] la figure 2 illustre des courbes de variation des absorbances de la picrocrocine (2A), du safranal (2B) et de la crocine (2C) en fonction de la masse de stigmates en grammes macérée par litre de liquide ;
[Fig. 3] la figure 3 illustre une courbe de variation de la somme des absorbances de la picrocrocine et du safranal en fonction de la masse de stigmates en grammes macérée par litre de liquide.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

## Description des modes de réalisation

De manière plus générale, la portée de la présente invention ne se limite pas aux modes de mise en œuvre et de réalisation décrits ci-dessus à titre d'exemples non limitatifs, mais s'étend au contraire à toutes les modifications à la portée de l'homme de l'art. Chaque caractéristique d'un mode de réalisation peut être mise en œuvre isolément ou combinée à toute autre caractéristique de tout autre mode de réalisation de manière avantageuse.

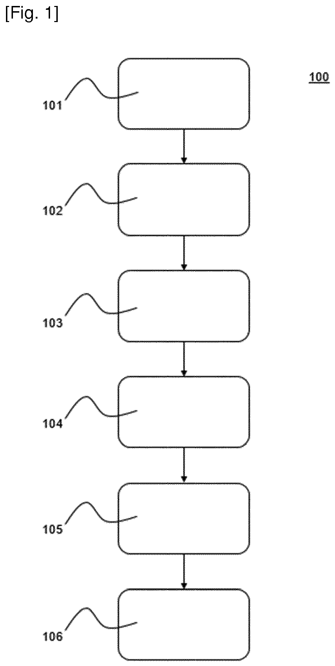

La présente invention vise un procédé **100** d'extraction de safran à partir de stigmates de fleurs de safran (figure 1). Un mode de mise en œuvre particulier de ce procédé 100 d'extraction est détaillé ci-après.

Ce procédé 100 comporte au moins une première étape **101** d'extraction durant laquelle des stigmates de fleurs de safran sont macérés dans un liquide, l'eau dans le présent mode de mise en œuvre, de sorte à obtenir un extrait de safran. La concentration en poids de stigmates dans le liquide est supérieure ou égale à 0,55 g/L, et la macération est réalisée sous vide à une température comprise entre 45°C et 55°C pendant une durée comprise entre 40 heures et 52 heures. Dans le mode de mise en œuvre présenté ici, la macération est réalisée sous vide à une température de 48°C pendant 48 heures.

Cette durée de macération à la température choisie avec de telles concentrations en stigmates dans le liquide permet d'assurer une macération totale et un équilibre entre les stigmates et le liquide, et ainsi d'extraire le safran dans le liquide sans endommager le safran et ses propriétés organoleptiques. En effet, avec cette durée de macération, des températures supérieures à 48°C endommagent ces propriétés tandis que des températures inférieures affectent la dissolution du safran dans le liquide. De même, avec cette température de macération, un temps plus court de macération ne serait pas suffisant pour une extraction totale du safran et une macération plus prolongée favoriserait le développement bactérien dans l'extrait de safran.

L'extrait de safran ainsi obtenu comprend une quantité de saveur de safran, et une quantité d'arôme de safran, respectivement supérieures ou égales à la quantité de saveur de safran et la quantité d'arôme de safran comprise dans le safran des stigmates des fleurs de safran utilisés pour la préparation dudit extrait.

Le procédé 100 comporte une deuxième étape **102** de pasteurisation de l'extrait de safran à une température comprise entre 63°C et 67°C pendant 45 minutes au minimum et 90 minutes au maximum, ce qui permet de contrer un éventuel développement bactérien dans ledit extrait.

Le procédé 100 comporte en outre une troisième étape **103** d'ajout à l'extrait de safran d'au moins un exhausteur de goût choisi parmi du sel et du sucre.

Le procédé 100 comporte une quatrième étape **104** d'ajout à l'extrait de safran d'acide citrique ce qui permet de vivifier la couleur jaune-orangée de l'extrait de safran et d'en améliorer sa conservation.

Le procédé 100 comporte une cinquième étape **105** d'ajout à l'extrait de safran d'un gélifiant naturel, de préférence l'agar-agar. De préférence le gélifiant naturel est au préalable dilué dans de l'eau en ébullition puis lors de l'étape 105 ledit gélifiant naturel, refroidi à une température comprise entre 45°C et 67°C, est ajouté à l'extrait qui est également à une température comprise entre 45°C et 67°C. Cette cinquième étape 105 est suivie d'une sixième étape **106** de sphérification par introduction dudit extrait de safran comprenant ledit gélifiant naturel dans de l'huile de pépins de raisins qui est à une température comprise entre -10°C et 4°C. Ledit extrait de safran comprenant le gélifiant naturel est à une température comprise entre 45°C et 67°C lors de son introduction dans l'huile. Cette sixième étape 106 permet d'obtenir un condiment comprenant l'extrait de safran, sous forme globale d'une ou plusieurs sphères. De plus, la sphérification avec agar-agar dans l'huile de pépins de raisins a pour avantage de ne pas altérer le goût de l'extrait de safran comparée aux méthodes de sphérifications connues, utilisées en cuisine moléculaire comme par exemple celles mettant en œuvre de l'alginate de sodium ou un jus avec du lactate de calcium, lesquelles, dégradent automatiquement le goût de l'extrait.

Avant l'étape 102 de pasteurisation, des mesures d'absorbance de la picrocrocine, du safranal et de la crocine ont été réalisées dans des extraits de safran obtenu par le procédé 100 et différenciés suivant la masse de stigmates en grammes macérée par litre d'eau. Par convention, la valeur donnée par chaque mesure est rapportée à une solution dans laquelle la longueur du trajet optique est de 1 cm et la concentration de la substance en solution est 1%.

L'absorbance est fonction de la concentration de la molécule (picrocrocine, ou safranal ou crocine) dans l'extrait pour une longueur d'onde donnée.

La concentration en picrocrocine dans l'extrait est responsable de la saveur en safran de l'extrait. La concentration en safranal dans l'extrait est quant à elle responsable de l'arôme de safran de l'extrait et la concentration en crocine de la couleur de l'extrait. Dans le cas de la fabrication d'un extrait de safran destiné à la dégustation ou bien d'un condiment culinaire comprenant ledit extrait, on peut considérer que les propriétés les plus importantes sont la saveur et l'arôme du safran. Plus la concentration en picrocrocine est élevée dans l'extrait, plus il aura une forte saveur en safran et plus la concentration en safranal est élevée dans l'extrait, plus il aura un fort arôme en safran.

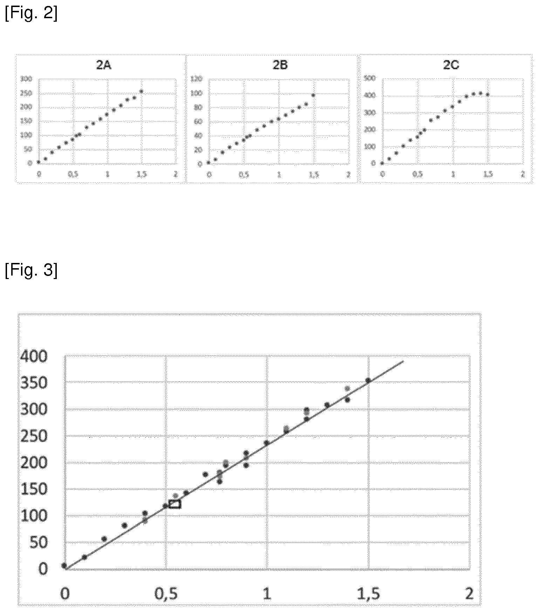

Les courbes illustrées en figure 2 montrent les résultats des absorbances de la picrocrocine (figure 2A) pour une longueur d'onde de 257 nm, du safranal (figure 2B) pour une longueur d'onde de 330 nm et de la crocine (figure 2C) pour une longueur d'onde de 440 nm, dans l'extrait de safran obtenu par le procédé 100 en fonction de la masse de stigmates en grammes macérée par litre d'eau.

On remarque que les standards d'absorbance selon la norme ISO/TS3632-2:2002 correspondant à une qualité de safran supérieure (Catégorie I) sont atteint pour l'extrait de safran obtenu avec le procédé 100 lorsque la masse de stigmates en grammes macérée par litre d'eau est de 0,55.

On constate que la concentration en crocine atteint un seuil pour des masses de stigmates comprises entre 1,2 g/L et 1,5 g/L. Cela correspond à l'atteinte d'une saturation en crocine dans l'eau et donc l'atteinte de la coloration maximale de l'eau. En revanche, les concentrations en picrocrocine et safranal subissent une augmentation linéaire pour des masses de stigmates allant jusqu'à 1,5 g/L. Au delà de 1,5 g/L, l'augmentation des concentrations en picrocrocine et en safranal se poursuit mais devient moindre, montrant que le liquide tend à devenir saturé. La courbe d'accroissement s'éloigne de la fonction linéaire définie pour des masses inférieures à 1,5 gramme. Une analyse plus poussée montre qu'une masse de 2 grammes de stigmates introduite dans 1L d'eau correspond à des concentrations en picrocrocine et en safranal optimales et qu'il n'est pas nécessaire de dépasser un poids de stigmates égal à 2 grammes.

De plus, dans un calcul ou les absorbances des trois molécules représentent 100%, c'est à dire où les concentrations en ces trois molécules sont elles aussi rapportées à 100%, la valeur relative de l'absorbance de la crocine par rapport aux absorbances des deux autres molécules (par rapport aux absorbances de la picrocrocine et du safranal) est diminuée d'environ 10% à 12% dans les extraits de safran par rapport à sa valeur relative dans le safran des stigmates utilisés pour obtenir lesdits extraits.

Ces résultats montrent clairement que la crocine est moins fidèlement extraite que les deux autres molécules.

Après l'étape 102 de pasteurisation, la mesure des absorbances de chaque molécule dans les extraits a également été effectuée. L'absorbance de la crocine s'est effondrée sans répartition logique alors que la somme des absorbances de la picrocrocine et du safranal demeure toujours proportionnelle à la masse de stigmates utilisée par litre d'eau, comme montré par la figure 3 qui illustre une courbe de variation de la somme des absorbances de la picrocrocine et du safranal dans les extraits de safran avant pasteurisation (points gris foncés) et après pasteurisation (points gris clairs), en fonction de la masse de stigmates en grammes macérée par litre d'eau pour l'obtention du extrait de safran selon le procédé 100. Le rectangle noir sur la courbe regroupe la position de 181 échantillons de safrans français.

Les variations après pasteurisation sont donc essentiellement dues à la dégradation de la crocine, beaucoup plus abondante que les deux autres molécules. L'intervention de la chaleur pendant l'étape 102 de pasteurisation a donc un fort impact sur la crocine.

La quantité de crocine dans les stigmates n'étant pas fidèlement transmise au cours du procédé 100 d'extraction et la crocine étant largement détruite par la chaleur au cours de la pasteurisation, le choix de ne considérer que les variables « saveur », liée à la concentration en picrocrocine, et « arôme », liée à la concentration en safranal, pour l'établissement d'un indice de force d'un extrait de safran, est conforté.

La force en saveur et arôme de l'extrait de safran obtenu est quantifiable par le calcul d'un indice progressif suivant trois niveaux que l'on peut qualifier d'équilibré, puissant et intense.

La force F de l'extrait de safran correspond à la somme de l'absorbance de la picrocrocine dans l'extrait de safran et de l'absorbance de safranal dans l'extrait de safran. La force F de l'extrait de safran est notamment donnée par la formule empirique suivante :

[Math. 1]

$$F = ((S+A)_{\text{safran utilisé}} + (23{,}5 \times (P-5{,}5)))$$

dans laquelle $(S+A)_{\text{safran utilisé}}$ est la somme des absorbances (avec concentration de la substance en solution : 1 % ; longueur du trajet optique : 1 cm) de la picrocrocine et du safranal contenu dans le safran des stigmates utilisés, P est le poids exprimé en décigrammes de stigmates introduit dans un litre de liquide. Le coefficient 23,5 est l'augmentation de la somme de l'absorbance de la picrocrocine dans l'extrait de safran et de l'absorbance de safranal dans l'extrait de safran pour l'ajout de 0,1 g de stigmates de fleurs de safran dans le liquide de base.

L'indice I caractérisant cette force est donné par la formule suivante :

[Math. 2]

$$I = F/(S+A)_{\text{safran de référence}}$$

dans laquelle $(S+A)_{\text{safran de référence}}$ est la somme des absorbances (avec concentration de la substance en solution : 1 % ; longueur du trajet optique : 1 cm) de la picrocrocine et du safranal contenu dans un safran de référence. Cette somme (S+A) des absorbances de la picrocrocine et du safranal dans le safran de référence peut être une moyenne issue d'analyses de safrans au plan régional comme la moyenne des safrans du Quercy, ou une moyenne nationale comme la moyenne des safrans français qui est égale à 135 (selon la publication de D. Rontein, du 4 avril 2018, sur la qualité de lots de safrans issus de la récolte 2017, disponible dans les archives du laboratoire AnaScan®).

Avec un indice allant de 0,8 à 1,5, la force F de l'extrait de safran obtenu est définie comme équilibrée. De 1,5 à 2,5, elle est considérée comme puissante et au-delà de 2,5 est considérée comme intense.

Par exemple, un extrait de safran préparé à partir du procédé 100 comportant une étape 101 d'extraction comprenant une macération de stigmates de fleurs de safran du Quercy dont la somme des absorbances (S+A) est égale à 130, avec une concentration en poids de stigmates dans le liquide de 1,3 g/L, aura une force F égale à 306 et sera caractérisé par l'indice 2,25 (puissant) par référence au safran français.

**Revendications**

**1.** Procédé (100) d'extraction de safran comportant au moins une étape (101) d'extraction par macération de stigmates de fleurs de safran dans un liquide de sorte à obtenir un extrait de safran, **caractérisé en ce que** la concentration en poids de stigmates dans le liquide est comprise entre 0,55 g/L et 2 g/L, et la macération est réalisée sous vide à une température comprise entre 45°C et 55°C pendant une durée comprise entre 40 heures et 52 heures.

2. Procédé (100) d'extraction selon la revendication 1, dans lequel la macération est réalisée à une température de 48°C pendant 48 heures.

3. Procédé (100) d'extraction selon l'une quelconque des revendications 1 à 2, comportant après l'étape (101) d'extraction, une étape (102) de pasteurisation dudit extrait de safran à une température comprise entre 63°C et 67°C pendant une durée comprise entre 45 minutes et 90 minutes.

4. Procédé (100) d'extraction selon l'une quelconque des revendication 1 à 3, comportant une étape (103) d'ajout à l'extrait de safran d'au moins un exhausteur de goût choisi parmi du sel et du sucre.

5. Procédé (100) d'extraction selon l'une quelconque des revendication 1 à 4, comportant une étape (104) d'ajout à l'extrait de safran d'acide citrique.

6. Procédé (100) d'extraction selon l'une quelconque des revendication 1 à 5, comportant une étape (105) d'ajout à l'extrait de safran d'un gélifiant naturel.

7. Procédé (100) d'extraction selon la revendication 6, dans lequel le gélifiant naturel ajouté lors de l'étape (105) est de l'agar-agar.

8. Procédé (100) d'extraction selon l'une quelconque des revendication 6 à 7, comportant en outre une étape (106) de sphérification de l'extrait de safran par introduction goutte à goutte dudit extrait étant à une température comprise entre 45°C et 67°C, dans une huile végétale étant à une température comprise entre -10°C et 4°C.

9. Extrait de safran obtenu selon le procédé (100) d'extraction selon l'une quelconque des revendications 1 à 8, comportant au moins une étape (101) d'extraction par macération de stigmates de fleurs de safran dans un liquide selon une concentration en poids de stigmates dans le liquide comprise entre 0,55 g/L et 2 g/L, ledit extrait comportant une une saveur et un arôme de safran égaux ou jusqu'à 4 fois supérieurs respectivement à la saveur et à l'arôme du safran compris dans les stigmates de fleurs de safran à partir desquels l'extrait de safran a été obtenu.

10. Condiment comportant un extrait de safran selon la revendication 9.

11. Extrait de safran selon la revendication 9 ou condiment selon la revendication 10, comprenant un gélifiant naturel et étant sous forme globale d'une ou plusieurs sphères.

[Fig. 1]

[Fig. 2]

[Fig. 3]

| | Europäisches Patentamt European Patent Office Office européen des brevets | **RAPPORT DE RECHERCHE EUROPEENNE** | Numéro de la demande EP 19 21 2460 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 921 797 A1 (LEPERS ALEXIS MAJID [FR]) 10 avril 2009 (2009-04-10) * le document en entier * ----- | 1-10 | INV. A23L27/10 A23L27/14 A23L33/105 |
| X | WO 2018/020013 A1 (ACTIV'INSIDE [FR]) 1 février 2018 (2018-02-01) * le document en entier * ----- | 9-11 | |
| X | US 2004/126467 A1 (AGARWAL SHRI GOPAL [IN] ET AL) 1 juillet 2004 (2004-07-01) * le document en entier * ----- | 9,10 | |
| X | ES 2 238 004 A1 (INVEST DE LA IND ALIMENTARIA A [ES]; ANTONIO PINA DIAZ S L) 1 août 2005 (2005-08-01) * le document en entier * ----- | 9,10 | |
| X | ES 2 663 907 A1 (JIMENEZ MORENO MANUEL [ES]; ESTEBAN SANCHEZ JOSE ANTONIO [ES]) 17 avril 2018 (2018-04-17) * le document en entier * ----- | 9-11 | DOMAINES TECHNIQUES RECHERCHES (IPC) |
| A | WO 2016/142352 A1 (CITRUS JUNOS S A R L [LU]) 15 septembre 2016 (2016-09-15) * le document en entier * ----- | 1 | A23L |
| A | WO 2018/101500 A1 (AGRICULTURAL CORP DARAECHON PEOPLE [KR]) 7 juin 2018 (2018-06-07) * le document en entier * ----- | 1 | |

-/--

Le présent rapport a été établi pour toutes les revendications

| Lieu de la recherche | Date d'achèvement de la recherche | Examinateur |
|---|---|---|
| La Haye | 13 mars 2020 | Piret-Viprey, E |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................
& : membre de la même famille, document correspondant

EPO FORM 1503 03.82 (P04C02)

page 1 de 2

Europäisches Patentamt
European Patent Office
Office européen des brevets

**RAPPORT DE RECHERCHE EUROPEENNE**

Numéro de la demande

EP 19 21 2460

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FARIDI ESFANJANI AFSHIN ET AL: "Preparation of a multiple emulsion based on pectin-whey protein complex for encapsulation of saffron extract nanodroplets", FOOD CHEMISTRY, ELSEVIER LTD, NL, vol. 221, 30 novembre 2016 (2016-11-30), pages 1962-1969, XP029844862, ISSN: 0308-8146, DOI: 10.1016/J.FOODCHEM.2016.11.149 * le document en entier * ----- | 8,11 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 13 mars 2020 | Piret-Viprey, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 21 2460

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-03-2020

| Document brevet cité au rapport de recherche | | Date de publication | Membre(s) de la famille de brevet(s) | | Date de publication |
|---|---|---|---|---|---|
| FR 2921797 | A1 | 10-04-2009 | AUCUN | | |
| WO 2018020013 | A1 | 01-02-2018 | AU | 2017303349 A1 | 07-02-2019 |
| | | | CA | 3031597 A1 | 01-02-2018 |
| | | | CN | 109843314 A | 04-06-2019 |
| | | | EP | 3490575 A1 | 05-06-2019 |
| | | | FR | 3054443 A1 | 02-02-2018 |
| | | | JP | 2019535639 A | 12-12-2019 |
| | | | KR | 20190034267 A | 01-04-2019 |
| | | | US | 2019160133 A1 | 30-05-2019 |
| | | | WO | 2018020013 A1 | 01-02-2018 |
| | | | ZA | 201900530 B | 30-10-2019 |
| US 2004126467 | A1 | 01-07-2004 | US | 2004126467 A1 | 01-07-2004 |
| | | | WO | 2004056201 A1 | 08-07-2004 |
| ES 2238004 | A1 | 01-08-2005 | AUCUN | | |
| ES 2663907 | A1 | 17-04-2018 | AUCUN | | |
| WO 2016142352 | A1 | 15-09-2016 | DK | 3264916 T3 | 12-08-2019 |
| | | | EA | 201791966 A1 | 30-03-2018 |
| | | | EP | 3264916 A1 | 10-01-2018 |
| | | | ES | 2740628 T3 | 06-02-2020 |
| | | | KR | 20180006884 A | 19-01-2018 |
| | | | PL | 3264916 T3 | 31-10-2019 |
| | | | PT | 3264916 T | 21-08-2019 |
| | | | US | 2018035695 A1 | 08-02-2018 |
| | | | WO | 2016142352 A1 | 15-09-2016 |
| WO 2018101500 | A1 | 07-06-2018 | KR | 20180060623 A | 07-06-2018 |
| | | | WO | 2018101500 A1 | 07-06-2018 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SEMIOND et al.** *identification and isotopic analysis of safranal from supercritical fluid extraction and alcoholic extracts of saffron,* 1996
- **BERGOIN M.** *Application du concept de raffinage végétal au safran du Quercy (crocus sativus) pour la valorisation intégrée des potentiels aromatiques et colorants,* 2005
- **HIMENO H. ; SANO K.** *synthesis of crocin, picrocrocin and safranal by saffron stigma-like structures proliferated in vitro,* 1987
- **RODEL W. ; PETRZIKA M.** *Analysis of the volatile components of Saffron,* 1991
- **RAINA B. L. et al.** *Changes in pigments and volatiles of Saffron (crocus stivus L.) during processing and storage,* 1996